# EUROPÄISCHE PATENTSCHRIFT

(11) **EP 2 516 304 B1**
(45) Veröffentlichungstag und Bekanntmachung des Hinweises auf die Patenterteilung: **05.03.2014**
(21) Anmeldenummer: 10784546.3
(22) Anmeldetag: 01.12.2010
(51) Int. Cl.: B66B 1/34, B66B 1/50

(54) **STOCKWERKPOSITIONSERKENNUNGSVORRICHTUNG**
Storey position detection device
Dispositif de reconnaissance de l'emplacement d'étage

(30) Priorität: 21.12.2009 EP 09180114
(43) Veröffentlichungstag der Anmeldung: 31.10.2012
(73) Patentinhaber: Inventio AG, 6052 Hergiswil (CH)
(72) Erfinder: ARNOLD, Daniel, CH-6454 Flüelen (CH); BIRRER, Eric, CH-6033 Buchrain (CH)
(74) Vertreter: Hirschberger, Petra
(86) Internationale Anmeldenummer: PCT/EP2010/068599
(87) Internationale Veröffentlichungsnummer: WO 2011/076533

(56) Entgegenhaltungen:
- EP-A1- 0 847 953
- WO-A1-03/011733
- FI-B1- 120 449

## Beschreibung

Die Erfindung betrifft insbesondere eine Stockwerkpositionserkennungsvorrichtung einer Aufzugsanlage nach dem Oberbegriff des Anspruchs 1.

Aus der Druckschrift EP 0847953 A1 ist eine Vorrichtung bekannt, mittels der ein Erreichen eines Stockwerks durch eine Aufzugskabine festgestellt werden kann. Die Vorrichtung umfasst zwei Permanentmagnete in gleicher Ausrichtung, die an einer das Stockwerk charakterisierenden Stelle angeordnet sind, einen Magnetfeldsensor zur Erfassung des durch die Permanentmagnete erzeugten Magnetfelds sowie eine Auswerteeinheit zur Auswertung eines Signals des Magnetfeldsensors.

Der Erfindung liegt insbesondere die Aufgabe zugrunde, eine einfache und kostengünstige Vorrichtung zur sicheren Erkennung einer Position eines Stockwerks einer Aufzugsanlage bereitzustellen. Sie wird gemäß der Erfindung durch die Merkmale des Anspruchs 1 gelöst. Weitere Ausgestaltungen ergeben sich aus den Nebenansprüchen und Unteransprüchen.

Die Erfindung betrifft eine Stockwerkpositionserkennungsvorrichtung einer Aufzugsanlage mit wenigstens einer ersten Sensoreinheit, die einen ersten Hall-Sensor aufweist und die dazu vorgesehen ist, zumindest eine Stockwerkpositionskenngröße zu erfassen, und mit einer Auswerteeinheit, die dazu vorgesehen ist, zur Erzeugung eines Stockwerksignals die Stockwerkspositionskenngröße auszuwerten.

Es wird vorgeschlagen, dass die Sensoreinheit zumindest einen zweiten Hall-Sensor aufweist und die Auswerteeinheit dazu vorgesehen ist, zumindest zwei Stockwerkpositionskenngrößen zur Erzeugung des Stockwerksignals auszuwerten. Durch eine Einbeziehung zumindest eines zweiten Hall-Sensors wird eine einfache und kostengünstige Lösung zur sicheren Erfassung der Stockwerkpositionskenngröße bereitgestellt. Unter einer "Stockwerkpositionskenngröße" soll in diesem Zusammenhang insbesondere das Signal eines Hall-Sensors aufgrund eines Magnetmittels verstanden werden, das an einer die Position des Stockwerks charakterisierenden Stelle angebracht ist. Unter einem "Stockwerksignal" soll in diesem Zusammenhang ein elektrisches oder elektronisches Signal, insbesondere ein Triggersignal, verstanden werden, das dazu vorgesehen ist, ein Erreichen einer definierten Relativposition zwischen einer Aufzugkabine und dem Stockwerk anzuzeigen. Unter einer "Auswerteeinheit" soll in diesem Zusammenhang insbesondere eine Elektronikeinheit zur Verarbeitung analoger und/oder digitaler elektrischer Signale verstanden werden. Unter "dazu vorgesehen" soll in diesem Zusammenhang insbesondere speziell ausgestattet, ausgelegt und/oder programmiert verstanden werden. Unter einem "Magnetmittel" soll in diesem Zusammenhang insbesondere ein Mittel zur Erzeugung eines Magnetfelds verstanden werden, insbesondere ein Permanentmagnet in zylindrischer Form. Vorzugsweise sind die zumindest zwei Hall-Sensoren in einem bekannten räumlichen Abstand angeordnet, wodurch eine sehr genaue Bestimmung der Position des Stockwerks erreicht werden kann. Vorteilhaft entspricht der Abstand der Hall-Sensoren zwischen 50% und 100% einer Halbwertsbreite (Full Width at Half Maximum, FWHM) des Signals der Sensoren.

Unter der "Halbwertsbreite" soll in diesem Zusammenhang insbesondere ein Abstand zweier Positionen eines Hall-Sensors verstanden werden, bei denen ein Signal des Hall-Sensors 50% einer zwischen den Positionen durch das Magnetmittel erzeugten maximalen Amplitude entspricht.

Ferner wird vorgeschlagen, dass die Stockwerkpositionserkennungsvorrichtung ein Absolutpositionssystem und eine Synchronisiereinheit umfasst, die dazu vorgesehen ist, das Stockwerksignal zu erzeugen und ein Auslesen von Absolutpositionsdaten des Absolutpositionssystems mit dem Stockwerksignal zu synchronisieren, wodurch eine schnelle und einfache Bestimmung und Überprüfung einer Absolutposition eines Stockwerks erreicht werden kann. Unter einem "Absolutpositionssystem" soll in diesem Zusammenhang ein bereits bekanntes System zur Feststellung einer absoluten Position einer Aufzugkabine innerhalb eines Fahrschachts, etwa gemäß der Druckschrift WO 03/011733 A1, in der eine Funktionsweise des Absolutpositionssystems detailliert beschrieben ist, verstanden werden. Unter einer "Synchronisiereinheit" soll in diesem Zusammenhang insbesondere eine Elektronikeinheit zur Verarbeitung im Wesentlichen digitaler elektrischer Signale verstanden werden. Vorzugsweise können die Auswerteeinheit und die Synchronisiereinheit zumindest teilweise einstückig ausgebildet sein. Grundsätzlich ist aber auch eine Trennung dieser Einheiten möglich.

Aus der Druckschrift FI120449 B1 ist eine Stockwerkpositionserkennungsvorrichtung mit fünf Hall-Sensoren bekannt, die mittels einer Auswerteeinheit fünf Stockwerkpositionskenngrößen zur Erzeugung des Stockwerksignals auswertet.

In einer vorteilhaften Ausgestaltung umfasst die Auswerteeinheit zumindest eine elektronische Schaltung, die dazu vorgesehen ist, Amplituden von analogen Signalen der zumindest zwei Hall-Sensoren zu vergleichen und bei gleicher Amplitude zumindest einen digitalen Schaltzustand zu ändern, wodurch eine Übereinstimmung von absoluten Höhepositionen der Sensoreinheit und des Magnetmittels im Fahrschacht an einer ein Stockwerk charakterisierenden Position zeitlich exakt erfasst und in einer weiterverwendbaren Form sehr einfach weiter verarbeitet werden kann. Vorzugsweise kann eines der Signale der zumindest zwei Hall-Sensoren mittels der elektronischen Schaltung in seinem Vorzeichen umgekehrt (invertiert) und mit dem Signal des zweiten Hall-Sensors addiert werden. Dem Fachmann sind gängige Methoden zur elektronischen Subtraktion von analogen Signalen bekannt. Vorteilhaft kann dadurch eine gleiche Signalhöhe der beiden Hall-Sensoren in eine einfacher detektierbare Signalhöhe der Größe Null umgewandelt werden. Insbesondere kann durch eine unterschiedliche Verstärkung der Signale der beiden Hall-Sensoren in der elektronischen Schaltung eine durch unterschiedliche Sensorempfindlichkeiten und/oder durch einen verschieden großen geringsten Abstand zum Magnetmittel unterschiedlich hohe Amplitude der Signale ausgeglichen werden, wodurch sich die Genauigkeit der Stockwerkpositionserkennungsvorrichtung erhöhen kann. Die zum Ausgleich der Amplituden erforderlichen Verstärkungen können in einer Lernfahrt der Aufzugkabine ermittelt werden.

Weiterhin wird vorgeschlagen, dass die Sensoreinheit zumindest einen dritten Hall-Sensor aufweist und die Auswerteeinheit dazu vorgesehen ist, zumindest drei Stockwerkpositionskenngrößen zur Erzeugung des Stockwerksignals auszuwerten. Durch eine Einbeziehung eines dritten Hall-Sensors lassen sich vorteilhaft Fehlinterpretationen der Signale der beiden anderen Hall-Sensoren ausschließen, wodurch auf einfache und kostengünstige Weise die Zuverlässigkeit der Stockwerkpositionserkennungsvorrichtung gesteigert wird. Vorzugsweise kann der dritte Hall-Sensor in einer mittleren Position in Bezug auf die beiden anderen Hall-Sensoren angebracht werden, so dass eine Gleichheit der Amplituden der Signale der ersten beiden Hall-Sensoren mit einer zusätzlichen, gleichzeitig zu erfüllenden Bedingung an eine minimale Amplitude des dritten Hall-Sensors zur Erhöhung der Zuverlässigkeit der Stockwerkpositionserkennungsvorrichtung verknüpft werden kann. Vorteilhaft kann eine Information aus dem Absolutpositionssystem dazu benutzt werden, eine Aufzugskabine in eine Nähe eines Magnetmittels an einer ein Stockwerk charakterisierenden Position zu verfahren, um Fehlinterpretationen der Signale der drei Hall-Sensoren aufgrund von Streufeldern und Nebenfeldlinien des Magnetmittels zu vermeiden. Unter "in eine Nähe" soll in diesem Zusammenhang ein nahester Abstand der drei Hall-Sensoren zum Magnetmittel verstanden werden, der einem Mittenabstand der beiden außen liegenden Hall-Sensoren entspricht.

In einer weiteren vorgeschlagenen Ausgestaltung weist die Auswerteeinheit vorteilhaft zumindest eine elektronische Komparatorschaltung auf, die dazu vorgesehen ist, ein analoges Signal zumindest eines der zumindest drei Hall-Sensoren zu digitalisieren, wodurch sich Bedingungen für die Signale der Hall-Sensoren besonders einfach in einer elektronischen Form auswerten lassen. Vorzugsweise kann als eine Komparatorschwelle ein Mindestwert für eine positive Amplitude eines Signals zumindest eines der Hall-Sensoren und als eine weitere Komparatorschwelle ein Höchstwert für eine negative Amplitude eines Signals zumindest eines der Hall-Sensoren festgelegt sein, wodurch vorteilhaft eine Annäherung zumindest eines der Hall-Sensoren an ein Magnetmittel an einer ein Stockwerk charakterisierenden Position durch eine Änderung eines Spannungspegels an einem Komparatorausgang besonders einfach detektiert werden kann. Vorteilhaft kann der Spannungspegel des Komparatorausgangs dazu verwendet werden, Annäherungssituationen der Sensoreinheit an das Magnetmittel zu definieren und in einer Koinzidenzschaltung fehlerhafte Schaltsignale, die durch eine Auswertung der anderen Hall-Sensoren entstehen können, auszufiltern. Die elektronische Komparatorschaltung kann mit Einzelkomparatoren oder als Fensterkomparator gebildet sein. Dem Fachmann sind dazu gängige Methoden bekannt.

Es wird des Weiteren vorgeschlagen, dass die Sensoreinheit zumindest einen vierten und einen fünften Hall-Sensor aufweist und die Auswerteeinheit dazu vorgesehen ist, zumindest fünf Stockwerkpositionskenngrößen zur Erzeugung des Stockwerksignals auszuwerten. Durch eine Einbeziehung eines vierten und eines fünften Hall-Sensors lassen sich vorteilhaft weitere mögliche Fehlinterpretationen der Signale des ersten und des zweiten Hall-Sensors ausschließen, wodurch die Zuverlässigkeit der Stockwerkpositionserkennungsvorrichtung auf einfache und kostengünstige Weise nochmals gesteigert wird. Vorzugsweise sind der vierte und der fünfte Hall-Sensor jeweils in einer Außenposition einer Reihe von Hall-Sensoren angeordnet, wodurch vorteilhaft von den Signalen dieser Hall-Sensoren auf eine Polarität eines durch ein Magnetmittel an einer ein Stockwerk charakterisierenden Position erzeugtes Magnetfeld geschlossen werden kann.

In einer vorteilhaften Ausgestaltung weist die Synchronisiereinheit Mittel zur Bestimmung einer zeitlichen Koinzidenz von kombinierten und digitalisierten Signalen der Hall-Sensoren auf, wodurch ein Zeitpunkt einer Übereinstimmung von Absolutpositionen der Sensoreinheit und des Magnetmittels an einer ein Stockwerk charakterisierenden Position exakt erfasst wird und Fehlinterpretationen von Signalen der Hall-Sensoren auf einfache und kostengünstige Weise zuverlässig ausgeschlossen werden können.

Es wird vorgeschlagen, dass die Sensoreinheit zumindest zwei Magnetmittel aufweist, die einem gemeinsamen Stockwerk zugeordnet sind. Durch eine Verwendung von zwei Magnetmitteln an charakterisierenden Positionen des Stockwerks lässt sich auf einfache und kostengünstige Weise die Zuverlässigkeit der Stockwerkpositionserkennungsvorrichtung steigern. Vorteilhaft kann eine Erkennung eines ersten Magnetmittels durch die Sensoreinheit als Hinweis auf eine Annäherung einer Aufzugskabine an ein Stockwerk benutzt werden, wodurch ein relativ geringer Verfahrweg der Aufzugskabine zum zweiten Magnetmittel des Stockwerks unter Einbeziehung von Signalen der Hall-Sensoren, die durch das zweite Magnetmittel erzeugt werden, besonders genau ermittelt werden kann.

In einer vorteilhaften Ausgestaltung umfasst die Stockwerkpositionserkennungsvorrichtung mindestens eine zweite, von der ersten Sensoreinheit funktionsmäßig unabhängige Sensoreinheit zur Erzeugung eines redundanten Stockwerksignals, so dass auf einfache und kostengünstige Weise eine erhöhte Sicherheit hinsichtlich der Stockwerkpositionserkennung erzielt wird.

Es wird eine Aufzugsanlage mit wenigstens einer Aufzugskabine und mit einer Stockwerkpositionserkennungsvorrichtung vorgeschlagen, bei der zumindest die erste Sensoreinheit an der Aufzugskabine angeordnet ist, wodurch sich eine besonders einfache und kostengünstige Lösung und hinsichtlich einer Installation ein besonders geringer Aufwand ergibt. Grundsätzlich wäre jedoch auch eine Anordnung denkbar, bei der ein Magnetmittel an einer charakterisierenden Position der Aufzugkabine und die zumindest erste Sensoreinheit an einer charakterisierenden Position eines Stockwerks angebracht ist.

Weitere Vorteile ergeben sich aus der folgenden Zeichnungsbeschreibung. In den Zeichnungen sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil einer Aufzugsanlage mit einer Aufzugskabine in einem Fahrschacht,
- Fig. 2: eine Sensoreinheit mit fünf Hall-Sensoren und eine schematische Darstellung einer Auswertung ihrer Signale und
- Fig. 3: einen elektronischen Schaltplan einer Auswerteeinheit und einer Synchronisiereinheit.

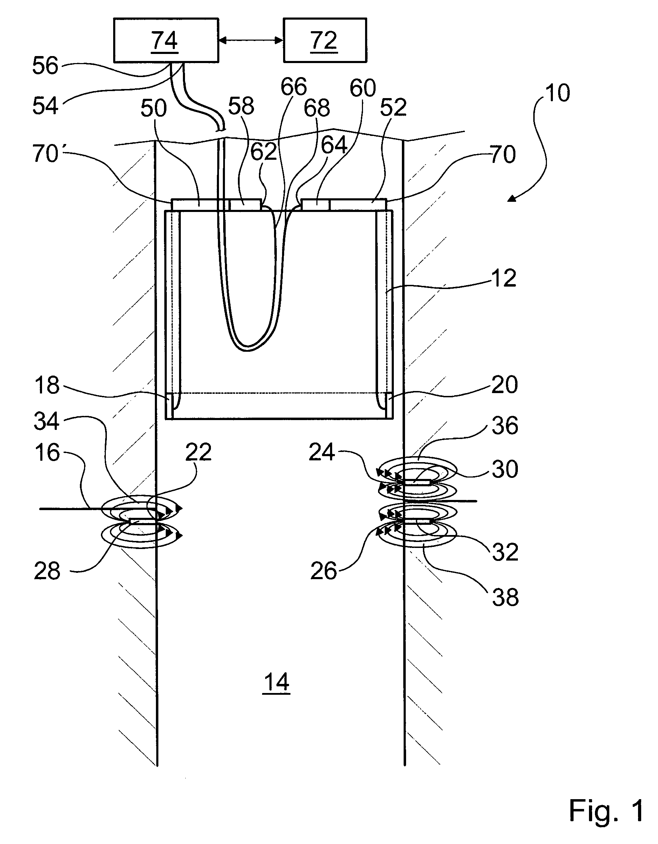

Fig. 1 zeigt einen Teil einer Aufzugsanlage 10 mit einer Aufzugskabine 12, die in einem Fahrschacht 14 verfahrbar ist. An der Aufzugskabine 12, die sich in der Nähe eines Stockwerks 16 befindet, sind an jeweils einer ihrer Seiten zwei funktionsmäßig unabhängig voneinander arbeitende Sensoreinheiten 18, 20 angeordnet, die dazu vorgesehen sind, jeweils eine Stockwerkpositionskenngröße zu erfassen. Die Stockwerkpositionskenngröße wird mit der ersten Sensoreinheit 18 dadurch erfasst, das im Fahrschacht 14 an einer das Stockwerk 16 charakterisierenden Position 22 ein Magnetmittel 28 angeordnet ist, das als Permanentmagnet ausgebildet ist und dessen Magnetfeld 34 bei einer Annäherung der ersten Sensoreinheit 18, die fünf Hall-Sensoren 40, 42, 44, 46, 48 umfasst, in den Hall-Sensoren 40, 42, 44, 46, 48 elektrische Signale erzeugt. Für die zweite Sensoreinheit 20 ist zu diesem Zweck eine Vorbeifahrt an zwei Magnetmitteln 30, 32, vorgesehen, die jeweils als Permanentmagnete ausgebildet und an das Stockwerk 16 charakterisierenden Positionen 24, 26 angeordnet sind und jeweils Magnetfelder 36, 38 erzeugen. Jede der Sensoreinheiten 18, 20 ist elektrisch mit jeweils einer Auswerteeinheit 50, 52 verbunden, die dazu vorgesehen ist, die fünf Stockwerkspositionskenngrößen jeweils einer Sensoreinheit 18, 20 zur Erzeugung eines Stockwerksignals 54, 56 auszuwerten.

Die unabhängig von der ersten Sensoreinheit 18 arbeitende zweite Sensoreinheit 20 wird aus Sicherheitsgründen zur Erzeugung eines redundanten Stockwerksignals 56 eingesetzt.

Jede der beiden unabhängigen Auswerteeinheiten 50, 52 ist mit einer Synchronisiereinheit 58, 60 elektrisch verbunden und in einem gemeinsamen Gehäuse 70, 70' angeordnet. Die Synchronisiereinheiten 58, 60 sind dazu vorgesehen, aus den elektrischen Signalen der jeweiligen Auswerteeinheit 50, 52 das Stockwerksignal 54, 56 zu erzeugen und ein Auslesen von Absolutpositionsdaten eines Absolutpositionssystems 72 mit dem Stockwerksignal 54, 56 zu synchronisieren. Dazu führt von jeweils einem Ausgang 62, 64 der Synchronisiereinheiten 58, 60 ein Signalkabel 66, 68 zu einer Steuereinheit 74, die mit dem Absolutpositionssystem 72, das hier nicht näher beschrieben werden soll und dessen Details in der Figur 1 nicht dargestellt sind, datenmäßig verbunden ist. Unter einer "Steuereinheit" soll in diesem Zusammenhang insbesondere ein Gerät mit einer Recheneinheit, einer Speichereinheit und einem darin gespeicherten Betriebsprogramm verstanden werden. Unter "Steuern" soll in diesem Zusammenhang ein gezieltes Betätigen in einem reinen Steuerungsablauf und/oder auch in einem Regelungsablauf verstanden werden. Die Steuereinheit 74 ist dazu vorgesehen, die Stockwerksignale 54, 56 der Synchronisiereinheiten 58, 60 bei deren Eintreffen zu prüfen und bei einer Erfüllung von in der Steuereinheit 74 hinterlegten Bedingungen hinsichtlich einer zeitlichen Übereinstimmung der beiden Stockwerksignale 54, 56 die Absolutpositionsdaten des Absolutpositionssystems 72 abzurufen und in einem Speicherelement der Steuereinheit 74 zu speichern.

Das in der Fig. 1 dargestellte Ausführungsbeispiel einer Stockwerkpositionserkennungsvorrichtung umfasst aus Redundanzgründen zwei unabhängig voneinander arbeitende Sensoreinheiten 18, 20, unabhängige Magnetmittel 28 sowie 30 und 32, zwei unabhängige Auswerteeinheiten 50, 52 und zwei unabhängige Synchronisiereinheiten 58, 60 zur Erzeugung der Stockwerksignale 54, 56. Grundsätzlich kann die Stockwerkpositionserkennungsvorrichtung aber auch mit einer einzigen Sensoreinheit 18 oder 20, einem Magnetmittel 28 oder 30 und 32, einer Auswerteeinheit 50 oder 52 und einer Synchronisiereinheit 58 oder 60 zur Erzeugung eines Stockwerksignals 54 oder 56 ausgestaltet sein, ohne dass der Gedanke der Erfindung beeinträchtigt wird.

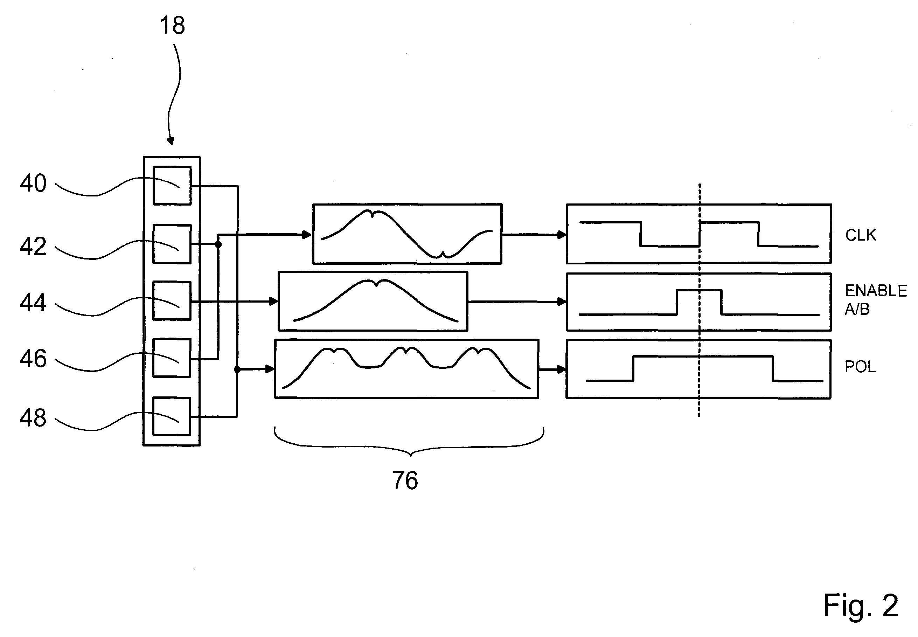

In der Fig. 2 ist eine der Sensoreinheiten 18 aus Fig. 1 mit fünf Hall-Sensoren 40, 42, 44, 46, 48 und eine schematische Darstellung einer Auswertung dargestellt. Die fünf Hall-Sensoren 40, 42, 44, 46, 48 sind entlang einer geraden, senkrechten Linie mit einem regelmäßigen Abstand von etwa acht Millimetern von Sensormitte zu Sensormitte ausgerichtet, so dass sie bei einer Vorbeifahrt in einem nahesten seitlichen Abstand von etwa fünf Millimetern an dem Magnetmittel 28 aus Fig. 1, das an einer das Stockwerk 16 charakterisierenden Position 22 angeordnet ist, nacheinander ein von dem Magnetmittel 28 erzeugtes Magnetfeld 34 erfassen.

Die fünf Hall-Sensoren 40, 42, 44, 46, 48 werden entsprechend einer späteren Auswertung ihrer analogen Signale 76 in der Auswerteeinheit 50 bezeichnet. Die beiden Hall-Sensoren 42 und 46 sind die Hauptsensoren (Main Sensors) und an zweiter und vierter Stelle der Sensoreinheit 18 angeordnet. Der Hall-Sensor 44 wird als Freigabe-Sensor (Enable Sensor) bezeichnet und ist zentral angeordnet. An den Außenpositionen der Anordnung von Hall-Sensoren 40, 42, 44, 46, 48 befinden sich die Hall-Sensoren 40 und 48, die zusammen mit dem Hall-Sensor 44 als Polaritäts-Sensoren bezeichnet werden.

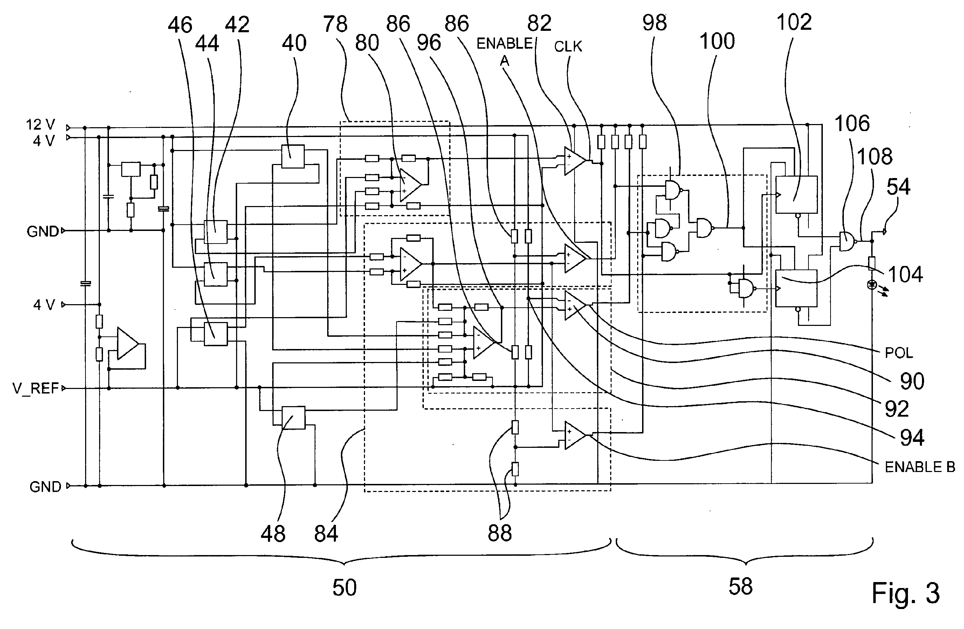

Im mittleren Teil der Fig. 2 sind schematisch die zu einer Auswertung kombinierten analogen Signale 76 der Hall-Sensoren 40, 42, 44, 46, 48 während einer Vorbeifahrt an dem Magnetmittel 28 aus Fig. 1 an einer das Stockwerk 16 charakterisierenden Position 22 dargestellt. Eine Signalverarbeitung der analogen Signale 76 der fünf Hall-Sensoren 40, 42, 44, 46, 48 erfolgt in der elektronischen Schaltung der Auswerteeinheit 50 gemäß dem mittleren Teil der Fig. 3. Der rechte Teil der Fig. 2 zeigt aus den kombinierten, analogen Signalen 76 der fünf Hall-Sensoren 40, 42, 44, 46, 48 gewonnene digitale Signale CLK, ENABLE A, ENABLE B und POL, die einer Synchronisiereinheit 58 zugeführt werden, die im rechten Teil der Fig. 3 dargestellt ist. Die Gewinnung der digitalen Signale CLK, ENABLE A, ENABLE B und POL wird im Folgenden erläutert.

Die Auswerteeinheit 50 in Fig. 3 umfasst eine elektronische Schaltung 78, die dazu vorgesehen ist, die Amplituden der analogen Signale 76 der Hall-Sensoren 42 und 46 zu vergleichen und bei gleicher Amplitude einen digitalen Schaltzustand zu ändern. Das Signal CLK wird erzeugt, indem das analoge Signal 76 des Hall-Sensors 46 von dem analogen Signal des Hall-Sensors 42 in einem Operationsverstärker 80 subtrahiert wird. Durch eine Anpassung von elektrischen Widerständen in einer Beschaltung des Operationsverstärkers 80 wurden die in einer Lernfahrt festgestellten unterschiedlichen Empfindlichkeiten und Minimalabstände zwischen den Hall-Sensoren 42 und 46 und dem Magnetmittel 28 kompensiert. Dadurch entspricht eine gleiche Amplitude an den Eingängen des Operationsverstärkers 80 einem gleichen Abstand der Hall-Sensoren 42 und 46 von dem Magnetmittel 28, das an einer das Stockwerk16 charakterisierenden Position 22 angeordnet ist. Dem Fachmann sind die zur Bestimmung der Widerstände notwendigen Methoden bekannt. Ein Nulldurchgang einer Differenz der Signale 76 der Hall-Sensoren 42 und 46 bewirkt eine Änderung einer Ausgangsspannung des Operationsverstärkers 80. Ein digitaler Schaltzustand eines nachgeschalteten weiteren Operationsverstärkers 82 zur Erzeugung des Signals CLK ändert sich mit der Höhe der Ausgangsspannung des Operationsverstärkers 80 relativ zu einer Referenzspannung V_REF.

Zur Erzeugung der digitalen Signale ENABLE A und ENABLE B weist die Auswerteeinheit 50 eine elektronische Komparatorschaltung 84 auf, die dazu vorgesehen ist, das analoge Signal 76 des Hall-Sensors 44 zu digitalisieren. Durch eine Widerstandsbeschaltung 86 eines Operationsverstärkers wird das Signal ENABLE A = "1" erzeugt, wenn das analoge Signal 76 des Hall-Sensors 44 eine positive Spannungsschwelle von +60 mV überschreitet. Durch eine Widerstandsbeschaltung 88 eines weiteren Operationsverstärkers wird das Signal ENABLE B = "1" erzeugt, wenn das analoge Signal 76 des Hall-Sensors 44 eine negative Spannungsschwelle von -60 mV unterschreitet.

Ein weiterer Operationsverstärker 90 stellt eine weitere Komparatorschaltung 92 dar, die eine fest eingestellte Referenzspannung 94 mit einer aus den Signalen der Hall-Sensoren 40, 44 und 48 kombinierten Amplitude 96 vergleicht und die ihren digitalen Schaltausgang ändert, wenn die kombinierte Amplitude 96 die Referenzspannung 94 über- bzw. unterschreitet. Eine Ausgangsspannung des Operationsverstärkers 90 stellt das digitale Signal POL dar.

Die Synchronisiereinheit 58 weist eine Logikschaltung 98 aus elektronischen Logikbausteinen als Mittel zur Bestimmung einer zeitlichen Koinzidenz der kombinierten und digitalisierten Signale der Hall-Sensoren 40, 42, 44, 46, 48, also der digitalen Signale CLK, ENABLE A, ENABLE B und POL, auf. Ein Ausgang 100 dieser Logikschaltung 98 wird auf einen Spannungspegel logisch "1" geschaltet, wenn ENABLE A auf "1" und POL auf "0" liegt oder wenn ENABLE B auf "1" und POL auf "1" liegt. Diese logische Bedingung stellt sicher, dass die Auswerteeinheit 50 nur dann reagiert, wenn sich die Sensoreinheit 18 nahe am Magnetmittel 28 befindet. Der Ausgang der Logikschaltung 100 liegt an Reset-Eingängen zweier auf positiven Flankenanstieg reagierender D-Flip-Flops 102, 104, deren Takteingänge jeweils von dem Signal CLK bzw. dem invertierten CLK-Signal angesteuert werden. Die beiden invertierten Datenausgänge der D-Flip-Flops werden in einem logischen NAND-Gatter 106 ausgewertet, was einer ODER-Bedingung an die nicht invertierten Datenausgänge entspricht. Bei gleicher Amplitude der Hall-Sensoren 42 und 46 und bei erfüllten logischen Bedingungen für die Signale ENABLE A, ENABLE B und POL schaltet ein Ausgang 108 des NAND-Gatters 106 auf logisch "1" und erzeugt ein Stockwerksignal 54.

## Patentansprüche

1. Stockwerkpositionserkennungsvorrichtung einer Aufzugsanlage (10) mit wenigstens einer ersten Sensoreinheit (18), die einen ersten Hall-Sensor (42) aufweist und die dazu vorgesehen ist, zumindest eine Stockwerkpositionskenngröße zu erfassen, und mit mindestens einer Auswerteeinheit (50), die dazu vorgesehen ist, zur Erzeugung eines Stockwerksignals (54) die Stockwerkspositionskenngröße auszuwerten, wobei die Sensoreinheit (18) zumindest einen zweiten Hall-Sensor (46) aufweist und die Auswerteeinheit (50) dazu vorgesehen ist, zumindest zwei Stockwerkpositionskenngrößen zur Erzeugung des Stockwerksignals (54) auszuwerten
**dadurch gekennzeichnet, dass**
die Auswerteeinheit (50) zumindest eine elektronische Schaltung (78) umfasst, die dazu vorgesehen ist, Amplituden von analogen Signalen (76) der zumindest zwei Hall-Sensoren (42, 46) zu vergleichen und bei gleicher Amplitude zumindest einen digitalen Schaltzustand zu ändern.

2. Stockwerkpositionserkennungsvorrichtung nach Anspruch 1,
**gekennzeichnet durch**
ein Absolutpositionssystem (72) und eine Synchronisiereinheit (58), die dazu vorgesehen ist, das Stockwerksignal (54) zu erzeugen und ein Auslesen von Absolutpositionsdaten des Absolutpositionssystems (72) mit dem Stockwerksignal (54) zu synchronisieren.

3. Stockwerkpositionserkennungsvorrichtung nach einem der vorhergehenden Ansprüche,
**dadurch gekennzeichnet, dass**
die Sensoreinheit (18) zumindest einen dritten Hall-Sensor (44) aufweist und die Auswerteeinheit (50) dazu vorgesehen ist, zumindest drei Stockwerkpositionskenngrößen zur Erzeugung des Stockwerksignals (54) auszuwerten.

4. Stockwerkpositionserkennungsvorrichtung nach einem der vorhergehenden Ansprüche,
**dadurch gekennzeichnet, dass**
die Auswerteeinheit (50) zumindest eine elektronische Komparatorschaltung (84, 92) aufweist, die dazu vorgesehen ist, ein analoges Signal (76) zumindest eines der zumindest drei Hall-Sensoren (42, 44, 46) zu digitalisieren.

5. Stockwerkpositionserkennungsvorrichtung zumindest nach Anspruch 3,
**dadurch gekennzeichnet, dass**
die Sensoreinheit (18) zumindest einen vierten und einen fünften Hall-Sensor (40, 48) aufweist und die Auswerteeinheit (50) dazu vorgesehen ist, zumindest fünf Stockwerkpositionskenngrößen zur Erzeugung des Stockwerksignals (54) auszuwerten.

6. Stockwerkpositionserkennungsvorrichtung nach Anspruch 3 oder 5,
**dadurch gekennzeichnet, dass**
die Synchronisiereinheit (58) Mittel zur Bestimmung einer zeitlichen Koinzidenz von kombinierten und digitalisierten Signalen der Hall-Sensoren (40, 42, 44, 46, 48) aufweist.

7. Stockwerkpositionserkennungsvorrichtung nach einem der vorhergehenden Ansprüche,
**dadurch gekennzeichnet, dass**
die Sensoreinheit (18) zumindest zwei Magnetmittel (30, 32) aufweist, die einem gemeinsamen Stockwerk (16) zugeordnet sind.

8. Stockwerkpositionserkennungsvorrichtung nach einem der vorhergehenden Ansprüche,
**gekennzeichnet durch**
mindestens eine zweite, von der ersten Sensoreinheit (18) funktionsmäßig unabhängige Sensoreinheit (18) zur Erzeugung eines redundanten Stockwerksignals (56).

9. Aufzugsanlage (10) mit wenigstens einer Aufzugskabine (12) und mit einer Stockwerkpositionserkennungsvorrichtung nach einem der vorhergehenden Ansprüche,
**dadurch gekennzeichnet, dass**
zumindest die erste Sensoreinheit (18) an der Aufzugskabine (12) angeordnet ist.

10. Verfahren zur Stockwerkpositionserkennung mit einer Stockwerkpositionserkennungsvorrichtung nach einem der Ansprüche 1 bis 8,
**dadurch gekennzeichnet, dass**
die Stockwerkpositionskenngrößen der zumindest zwei Hall-Sensoren (42, 46) ausgewertet werden, um das Stockwerksignal (54) zu erzeugen.

11. Verfahren nach Anspruch 10,
**dadurch gekennzeichnet, dass**
das Stockwerksignal (54, 56) eine Bereitstellung einer Absolutposition durch ein Absolutpositionssystem (72) an eine Steuereinheit (74) zumindest initiiert.

## Claims

1. Floor position detection device of an elevator system (10) having at least a first sensor unit (18) that comprises a first Hall sensor (42) and that is provided for the purpose of sensing at least one floor position characteristic, and having at least one evaluating unit (50) that is provided for the purpose of evaluating the floor position characteristic in order to generate a floor signal (54), wherein the sensor unit (18) comprises at least a second Hall sensor (46) and the evaluating unit (50) is provided for the purpose of evaluating at least two floor position characteristics in order to generate the floor signal (54),
**characterized in that**
the evaluating unit (50) comprises at least one electronic circuit (78) that is provided for the purpose of comparing amplitudes of analog signals (76) from the at least two Hall sensors (42, 46) and in the case of an identical amplitude changing at least one digital switching state.

2. Floor position detection device according to Claim 1,
**characterized by**
an absolute position system (72) and a synchronizing unit (58) that is provided for the purpose of generating the floor signal (54) and for synchronizing a read-out of absolute position data of the absolute position system (72) with the floor signal (54).

3. Floor position detection device according to any one of the preceding claims,
**characterized in that**
the sensor unit (18) comprises at least a third Hall sensor (44) and the evaluating unit (50) is provided for the purpose of evaluating at least three floor position characteristics in order to generate the floor signal (54).

4. Floor position detection device according to any one of the preceding claims,
**characterized in that**
the evaluating unit (50) comprises at least one electronic comparator circuit (84, 92) that is provided for the purpose of digitizing an analog signal (76) from at least one of the at least three Hall sensors (42, 44, 46).

5. Floor position detection device at least according to Claim 3,
**characterized in that**
the sensor unit (18) comprises at least a fourth and a fifth Hall sensor (40, 48) and the evaluating unit (50) is provided for the purpose of evaluating at least five floor position characteristics in order to generate the floor signal (54).

6. Floor position detection device according to Claim 3 or 5,
**characterized in that**
the synchronizing unit (58) comprises means for determining a timing coincidence of combined and digitized signals from the Hall sensors (40, 42, 44, 46, 48).

7. Floor position detection device according to any one of the preceding claims,
**characterized in that**
the sensor unit (18) comprises at least two magnetic means (30, 32) that are allocated to a common floor (16).

8. Floor position detection device according to any one of the preceding claims,
**characterized by**
at least a second sensor unit (18) that functions independently from the first sensor unit (18) in order to generate a redundant floor signal (56).

9. Elevator system (10) having at least one elevator cabin (12) and having a floor position detection device according to any one of the preceding claims,
**characterized in that**
at least the first sensor unit (18) is arranged on the elevator cabin (12).

10. Method for detecting the position of a floor having a floor position detection device according to any one of Claims 1 to 8,
**characterized in that**
the floor position characteristics of the at least two Hall sensors (42, 46) are evaluated in order to generate the floor signal (54).

11. Method according to Claim 10,
**characterized in that**
the floor signal (54, 56) at least initiates an absolute position being provided by means of an absolute position system (72) to a control unit (74).

## Revendications

1. Dispositif de détection de position d'étage d'un système d'ascenseur (10) comportant au moins une première unité de détection (18) qui comprend un premier capteur à effet Hall (42) prévue pour détecter au moins une grandeur caractéristique de position d'étage, et qui comporte au moins une unité d'évaluation (50) prévue pour évaluer la grandeur caractéristique de position d'étage afin de produire un signal d'étage (54), dans lequel l'unité de détection (18) comprend au moins un deuxième capteur à effet Hall (46) et l'unité d'évaluation (50) est prévue pour évaluer au moins deux grandeurs caractéristiques de position d'étage afin de générer le signal d'étage (54), **caractérisé en ce que**
l'unité d'évaluation (50) comprend au moins un circuit électronique (78) qui est prévu pour comparer des amplitudes de signaux analogiques (76) des au moins deux capteurs à effet Hall (42, 46) et pour modifier au moins un état de commutation numérique lorsque les amplitudes sont égales.

2. Dispositif de détection de position d'étage selon la revendication 1, **caractérisé par** un système de positionnement absolu (72) et une unité de synchronisation (58) prévue pour générer le signal d'étage (54) et pour synchroniser une lecture de données de position absolue du système de positionnement absolu (72) avec le signal d'étage (54).

3. Dispositif de détection de position d'étage selon l'une quelconque des revendications précédentes, **caractérisé en ce que** l'unité de détection (18) comprend au moins un troisième capteur à effet Hall (44) et l'unité d'évaluation (50) est prévue pour évaluer au moins trois grandeurs caractéristiques de position d'étage afin de générer le signal d'étage (54).

4. Dispositif de détection de position d'étage selon l'une quelconque des revendications précédentes, **caractérisé en ce que** l'unité d'évaluation (50) comprend au moins un circuit comparateur électronique (84, 92) prévu pour numériser un signal analogique (76) d'au moins l'un des au moins trois capteurs à effet Hall (42, 44, 46).

5. Dispositif de détection de position d'étage selon au moins la revendication 3, **caractérisé en ce que** l'unité de détection (18) comprend au moins un quatrième et un cinquième capteurs à effet Hall (40, 48) et **en ce que** l'unité d'évaluation (50) est prévue pour évaluer au moins cinq grandeurs caractéristiques de position d'étage afin de générer le signal d'étage (54).

6. Dispositif de détection de position d'étage selon la revendication 3 ou 5, **caractérisé en ce que** l'unité de synchronisation (58) comprend des moyens destinés à déterminer une coïncidence temporelle entre des signaux combinés et numérisés des capteurs à effet Hall (40, 42, 44, 46, 48).

7. Dispositif de détection de position d'étage selon l'une quelconque des revendications précédentes, **caractérisé en ce que** l'unité de détection (18) comprend au moins deux moyens à aimants (30, 32) qui sont associés à un étage commun (16).

8. Dispositif de détection de position d'étage selon l'une quelconque des revendications précédentes, **caractérisé par** au moins une deuxième unité de détection (18) fonctionnellement indépendante de la première unité de détection (18) pour générer un signal d'étage redondant (56).

9. Système d'ascenseur (10) comportant au moins une cabine d'ascenseur (12) et comportant un dispositif de détection de position d'étage selon l'une quelconque des revendications précédentes, **caractérisé en ce qu'**au moins la première unité de détection (18) est disposée sur la cabine d'ascenseur (12).

10. Procédé de détection de position d'étage comportant un dispositif de détection de position d'étage selon l'une quelconque des revendications 1 à 8, **caractérisé en ce que** les grandeurs caractéristiques de position d'étage des au moins deux capteurs à effet Hall (42, 46) sont évaluées afin de générer le signal d'étage (54).

11. Procédé selon la revendication 10, **caractérisé en ce que** le signal d'étage (54, 56) déclenche au moins une fourniture d'une position absolue par le système de positionnement absolu (72) à une unité de commande (74).
